## Europäisches Patentamt

## European Patent Office

## Office européen des brevets

(19)

(11) Veröffentlichungsnummer: **0 029 615**
**A1**

(12) **EUROPÄISCHE PATENTANMELDUNG**

(21) Anmeldenummer: **80200859.9**

(22) Anmeldetag: **12.09.80**

(51) Int. Cl.³: **H 02 K 19/38**
**F 16 D 1/02**

(30) Priorität: **23.11.79 DE 2947192**

(43) Veröffentlichungstag der Anmeldung:
**03.06.81 Patentblatt 81/22**

(84) Benannte Vertragsstaaten:
**AT CH FR IT LI NL SE**

(71) Anmelder: **BBC Brown, Boveri & Cie.
(Aktiengesellschaft)**

**CH-5401 Baden(CH)**

(72) Erfinder: **Rösch, Philipp
Am Schlangenpfad 24
D-6806 Viernheim(DE)**

(72) Erfinder: **Fischl, Rolf
Leipzigerstrasse 29
D-6842 Bürstadt(DE)**

(54) **Wellenkupplung zur Drehmoment- und Stromübertragung.**

(57) Bei einer mechanisch-elektrischen Wellenkupplung zur Drehmoment -und Stromübertragung zwischen einem Synchrongenerator und der zugeordneten Gleichstromerregermaschine sind die in der Hohlwelle (1,2) angeordneten Stromschienen (5, 6, 7, 8) über Stecker (14, 16, 28, 37) miteinander verbunden; eine kurze Baulänge der Kupplung und ein geringer Ausfahrweg beim Entkuppeln der beiden Maschinen wird dadurch erreicht, dass die Verbindungsstecker als Flächenstecher ausgebildet sind und Kontaktlamellen (17) besitzen. Die Flächenstecker können eben oder ringförmig ausgebildet sein.

EP 0 029 615 A1

Figur 1

645/79

BBC Aktiengesellschaft Brown, Boveri & Cie., Baden

Wellenkupplung zur Drehmoment- und Stromübertragung.

Die Erfindung bezieht sich auf eine Wellenkupplung zur Drehmoment- und Stromübertragung, insbesondere für elektrische Maschinen, bei denen innerhalb der Kupplung die in Hohlwellen vorgesehenen und einander zugeordneten Stromschienen über Stecker miteinander elektrisch verbunden sind.

Derartige Kupplungen finden beispielsweise dann bei elektrischen Maschinen Anwendung, wenn die getrennte Herstellung kostengünstiger ist. Dies ist z.B. bei Synchrongeneratoren mit einer getrennten Gleichstromerregermaschine der Fall. Bei diesen Gleichstromerregermaschinen wird der von der Erregermaschine erzeugte Wechselstrom mittels mitrotierender Gleichrichter in Gleichstrom umgeformt und kann somit unmittelbar zur Speisung des Läufers des Synchrongenerators benutzt werden. Derartige Speiseeinrichtungen

645/79                                   - 2 -

sind bereits bekannt. Die Stromschienen sind innerhalb der
zur Drehmomentübertragung vorgesehenen Welle angeordnet.
Die elektrische Verbindung der jeweils einander zugeordneten Stromschienen erfolgt meist an der selben Stelle,
an der auch die mechanische Kupplung zur Drehmomentübertragung vorgesehen ist. Die Stromschienen sind mit einem
Bund versehen, der mittels Schrauben oder dergl. zusammengepreßt wird, um einen sicheren Kontakt zu gewährleisten.
Beim Entkuppeln der beiden Maschinen wird meist die Gleichstromerregermaschine soweit verschoben, bis die mechanischen und elektrischen Verbindungselemente gelöst werden
können. Der erforderliche Ausfahrweg ist daher von den
mechanischen und elektrischen Verbindungselementen abhängig.

Die DE-OS 18 07 438 zeigt verschiedene Ausführungsformen
dieses Lösungsprinzips und zwar für zwei halbrunde Leiterstäbe, für konzentrische Leiterstäbe und für eine Kupplung
zwischen zwei halbrunden Leiterstäben mit zwei konzentrischen Leiterstäben.

Diese bekannte Bauart bedingt eine Vergrößerung der Flansche zur mechanischen Drehmomentübertragung, so daß diese
bekannte Wellenkupplung groß baut. Außerdem müssen die Bohrungen in den mit den Leiterstäben verbundenen Flanschen
übereinstimmen. Da diese Flansche meist als Halbflansche
hergestellt sind, erfordert die Herstellung genauer Bohrungen eine hohe Fertigungsgenauigkeit.

Die CH-PS 427 009 zeigt eine Wellenkupplung, bei der der
Durchmesser gegenüber den Anordnungen gemäß den Ausführungen in der DE-OS 18 07 438 verkleinert werden konnte.
Jedoch ist der Aufwand für die elektrische Verbindung der
einander zugeordneten Stromleiter noch erheblich.

Der vorliegenden Erfindung liegt die Aufgabe zugrunde, die elektrischen Verbindungen einer derartigen Wellenkupplung so zu verbessern, daß für die Stromleiter keine zusätzlichen Flansche oder dergl., die eine Durchmesservergrösserung und/oder eine axiale Verlängerung der Wellenkupplung zur Folge haben, und keine zusätzlichen Bauteile erforderlich sind. Außerdem soll der erforderliche Ausfahrweg zum Entkuppeln der beiden Maschinen voneinander möglichst gering sein.

Diese Aufgabe wird gemäß der Erfindung dadurch gelöst, daß die Kontakte der Verbindungsstecker als Flächenstecker ausgebildet sind.

Nach weiteren Merkmalen der Erfindung sind die Verbindungsstecker eben ausgebildet und die Stromschienen besitzen entsprechende schlitzartige Aussparungen für die Aufnahme der Verbindungsstecker. Die Kontaktfläche der Verbindungsstecker kann auch gebogen ausgebildet sein. In diesem Fall sind die schlitzartigen Aussparungen für die Aufnahme der Verbindungsstecker ebenfalls bogenförmig ausgebildet.

Die Verbindungsstecker und damit auch die Kontaktflächen können auch kreisringförmig ausgebildet sein. Diese Ausführungsform ist besonders für konzentrisch zueinander angeordnete Stromschienen geeignet. In den konzentrisch zueinander angeordneten Stromschienen können entweder ringförmige Schlitze oder ringförmige Ansätze zur Aufnahme der ringförmigen Stecker vorgesehen sein. Diese Verbindungsstecker mit kreisringförmig ausgebildeten Kontaktflächen können auch bei halbrunden Stromschienen verwendet werden, wenn mittels besonderer Anschlußstücke die beiden halbrunden Stromschienen in zwei zueinander konzentrischen Stromschienen überführt werden. In den Stirnflächen der Anschlußstücke mit den konzentrischen Stromschienen können ringförmige Schlitze oder ringförmige Ansätze zur Aufnahme der ringförmigen Flächenstecker vorgesehen sein.

In den Figuren 1 bis 8 sind zwei schematische Ausführungsbeispiele der Erfindung dargestellt.

Es zeigen:
Fig. 1     einen Längsschnitt durch eine Wellenkupplung mit
           Flachsteckern und
Fig. 2     einen Querschnitt durch die Stromschienen und
           die Stecker;
Fig. 3     einen Längsschnitt durch eine Wellenkupplung mit
           kreisringförmigen Verbindungssteckern und Übergangsstücken von halbkreisförmigen Stromschienen
           auf konzentrisch angeordneten Stromschienen und
Fig. 4-8   eine Ansicht auf die Stirnfläche der konzentrisch
           angeordneten Leiter und Querschnitte durch die
           Übergangsstücke.

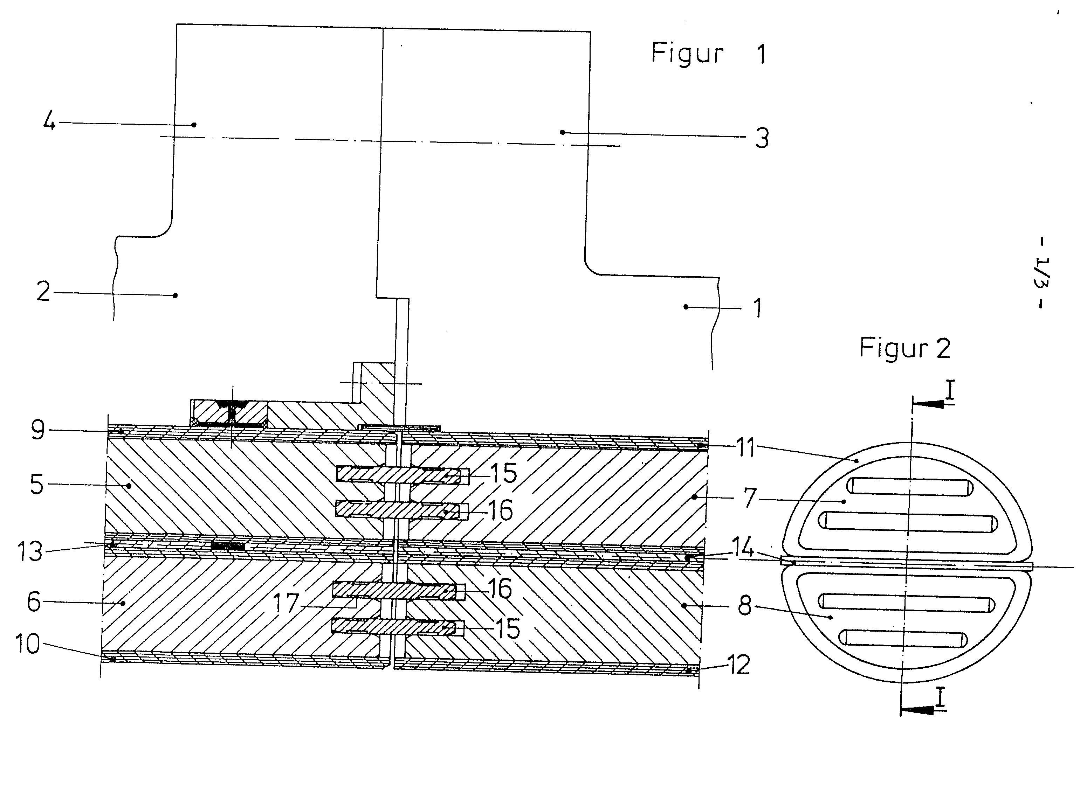

In Figur 1 sind die beiden miteinander zu kuppelnden rohrartigen Wellenteile mit 1 und 2 bezeichnet. Diese Rohrteile sind beispielsweise mit einem hier nicht dargestellten Synchrongenerator bzw. einer Erregermaschine mit umlaufenden Gleichrichtern verbunden. Die mechanische Kupplung der beiden Wellenteile erfolgt über die Flansche 3
und 4, die in hier nicht dargestellter Weise mittels Schrauben zusammengehalten werden. Im Inneren der rohrartigen
Wellenteile 1 und 2 befinden sich die halbrunden Stromschienen 5 und 6 bzw. 7 und 8. Eine elektrische Verbindung mit den Wellenteilen 1 und 2 bzw. der elektrischen
Stromschienen miteinander wird durch die Isolierungen 9
und 10 bzw. 11 und 12 vermieden. Zusätzlich sind die beiden halbrunden Leiter noch durch ein Zwischenlager 13 bzw.
14 voneinander getrennt.

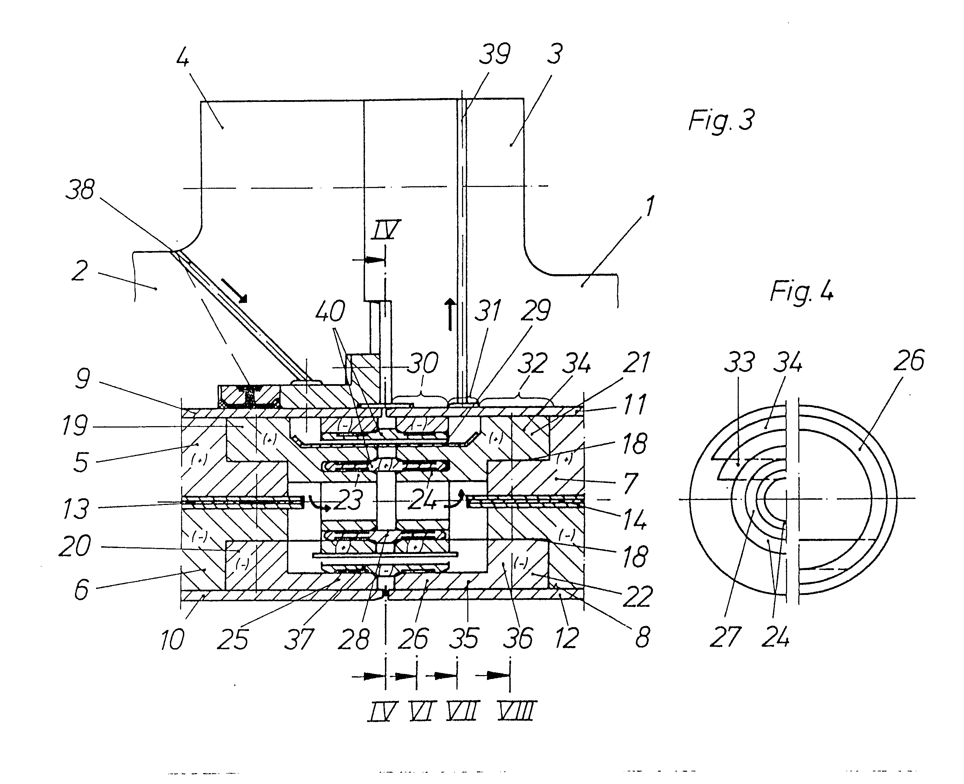

Die einander gegenüberliegenden Stromschienen 5 und 7 bzw.
6 und 8 sind über Verbindungsstecker 15 und 16 miteinander
verbunden. Wie der Querschnitt gemäß Figur 2 erkennen läßt,

müssen infolge der halbrunden Querschnittsform zwei verschieden lange Verbindungsstecker eingesetzt werden. Statt der ebenen Ausbildung der Verbindungsstecker können auch gebogene, die der äußeren Wölbung der Stromschienen angepaßt sind, verwendet werden. Um einen sicheren Kontakt zu gewährleisten, sind die Verbindungsstecker mit Kontaktlamellen 17 versehen.

Die Figuren 3 bis 8 zeigen als weiteres Ausführungsbeispiel der Erfindung die Verwendung von kreisringförmigen Verbindungssteckern. Hierbei wurde als Ausführungsbeispiel die Anordnung von halbrunden Stromschienen innerhalb der rohrförmigen Wellenteile gewählt, die mittels Anschlußstücken in konzentrisch zueinander liegende Stromschienen übergeführt werden. Sind innerhalb der rohrförmigen Wellenteile bereits konzentrisch zueinander angeordnete Stromleiter vorhanden, so sind besondere Anschlußstücke nicht erforderlich.

Die Bauteile, die mit den in den Figuren 1 und 2 bereits beschriebenen übereinstimmen, sind in den Figuren 3 und 4 mit den gleichen Bezugszeichen versehen. Unterschiedlich gegenüber Figur 1 ist, daß, um Platz für die Übergangsstücke zu gewinnen, die Stromschienen nicht bis in die Mitte der Kupplung reichen. Außerdem besitzen die Stromleiter 5, 6 und 7, 8 Abflachungen 18 zur elektrisch leitenden Befestigung, z.B. durch Löten, der Übergangsstücke 19 bis 22 an den Stromschienen 5 bis 8. Die Übergangsstücke 19 und 21 führen zu inneren kreisförmigen Stromschienen und die Übergangsstücke 20 und 22 je zu äußeren kreisförmigen Stromschienen 25 bzw. 26.

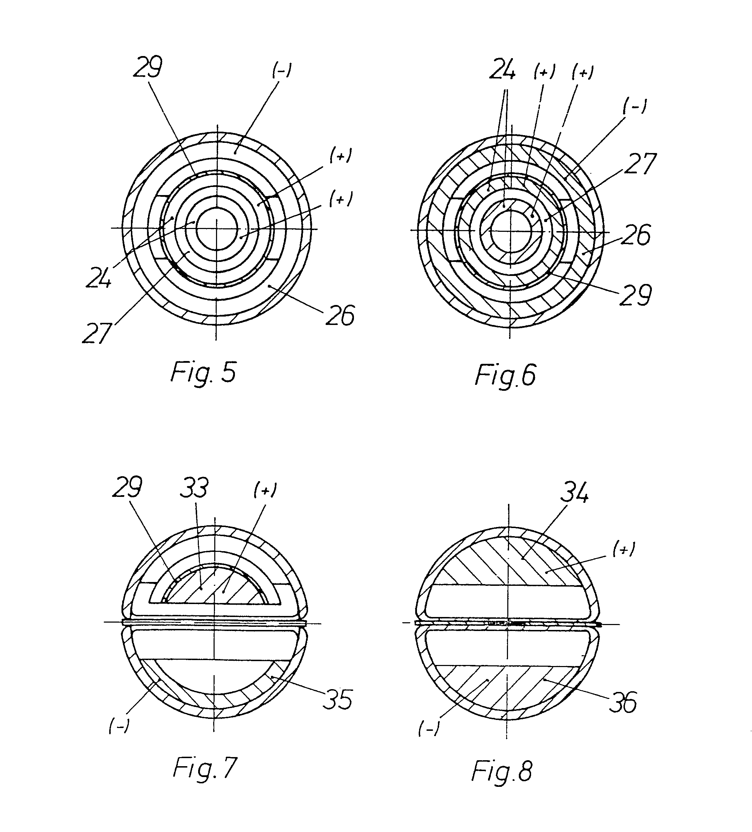

Die Figuren 4 bis 8 zeigen Ansichten bzw. Querschnitte der Übergangsstücke entsprechend den Linien IV -. IV, VI - VI, VII - VII und VIII - VIII. Die Figur 4 zeigt in der linken Hälfte eine Ansicht auf das Übergangsstück 21, das zu einer inneren kreisförmigen Stromschiene führt, während die rechte Hälfte der Figur 4 eine Ansicht auf das Übergangsstück 22 zeigt, das zu einer äußeren kreisförmigen Stromschiene 26 führt. Die Figur 5 zeigt eine Ansicht auf die Stirnfläche der Übergangsstücke 21 und 22.

Es sei zunächst das Übergangsstück 21 beschrieben, das zu einer inneren kreisförmigen Stromschiene 24 führt. Wie den Figuren 3 bis 5 zu entnehmen ist, besitzt die innere kreisförmige Stromschiene 24 eine kreisförmige Nut 27 zur Aufnahme des kreisförmigen Verbindungssteckers 28, der in den Figuren 4 bis 8 nicht dargestellt ist. Auf der Außenseite trägt die kreisförmige Stromschiene eine Isolierung 29, die sich auch über den kreisförmigen Leiter 23 des Verbindungsstückes 19 erstreckt. Das Übergangsstück 21 kann in die Bereiche 30, 31 und 32 eingeteilt werden. Der kreisförmige Leiterteil 24 erstreckt sich nur über den Bereich 30, während im Bereich 31 wie Figur 7 zu entnehmen ist, ein kreissegmentförmiges Stück 33 den Übergang auf das Anschlußstück 34, das sich über den Bereich 32 erstreckt, herstellt. Dieses Anschlußstück 34 besitzt eine der Abflachung 18 des halbkreisförmigen Leiters 7 entsprechende Abflachung und beide Flächen werden miteinander elektrisch leitend, z.B. durch Löten, verbunden.

Das Anschlußstück 22 besitzt einen äußeren kreisförmigen Leiter 26. Dieser erstreckt sich ebenfalls nur über den Abschnitt 30, wie den Figuren 3 bis 6 entnommen werden kann. Im Bereich 31 ist ein Übergangsstück 35 zu dem Anschlußstück 36 vorhanden. Das Übergangsstück 35 ist kreisringsegmentförmig ausgebildet, wie sich aus Figur 7 ergibt. Das Anschlußstück 36 besitzt ebenso eine kreissegmentförmige Gestalt wie das Anschlußstück 34, wie sich aus Figur 8 entnehmen läßt. Das Anschlußstück 36 erstreckt sich ebenso wie das Anschlußstück 34 über den Bereich 32 und besitzt ebenfalls eine der Abflachung 18 des halbkreisförmigen Leiters 8 entsprechende Fläche. Die beiden Teile werden an dieser Fläche elektrisch leitend, z.B. durch Löten verbunden. Die beiden kreisringförmigen Außenleiter 25 und 26 werden durch den Verbindungsstecker 37, der nur an der Innenfläche jedes Kreisringes aufliegt, elektrisch miteinander verbunden.

Die Verbindungsstecker 15, 16 und 28, 37 können in ihrem mittleren, zwischen den beiden Stromschienen liegenden Teil 40 einen Wulst oder dergl. besitzen. Hierdurch kann eine eindeutige Fixierung der Stecker erreicht werden.

Wie den Figuren 1 und 3 zu entnehmen ist, ist durch die Verwendung der Verbindungsstecker bei der Lösung der Wellenkupplung nur ein geringes Auseinanderschieben der elektrischen Maschinen erforderlich. Es sei noch erwähnt, daß über die Bohrungen 38 und 39 ein Be- und Entlüften der Kupplung möglich ist, um Wasserstoff absaugen zu können, der bei schadhaften Dichtelementen vom Generator in die Erregermaschine gelangen kann, so daß sich dort ein explosives Gasgemisch bilden kann.

0029615

## Bezugszeichenliste

| | |
|---|---|
| 1, 2 | Wellenteile |
| 3, 4 | Flansche |
| 5 - 8 | Stromschienen |
| 9 - 12 | Isolierungen |
| 13, 14 | Zwischenlager |
| 15, 16 | Verbindungsstecker |
| 17 | Kontaktlamellen |
| 18 | Abflachungen |
| 19 - 22 | Uebergangsstücke |
| 23 | kreisförmiger Leiter |
| 24 | Kreisförmige Stromschiene innen |
| 25, 26 | kreisförmige Stromschienen aussen |
| 27 | kreisförmige Nut |
| 28 | kreisförmiger Verbindungsstecker |
| 29 | Isolierung |
| 33 | kreissegmentförmiges Stück |
| 34 | Anschlussstück |
| 35 | Uebergangsstück |
| 36 | Anschlussstück |
| 37 | Verbindungsstecker |
| 38, 39 | Bohrungen |

Mp.-Nr. 645/79

A n s p r ü c h e

1. Wellenkupplung zur Drehmoment- und Stromübertragung, insbesondere für elektrische Maschinen, bei denen innerhalb der Kupplung die in den Hohlwellen vorgesehenen und einander zugeordneten Stromschienen über Stecker miteinander verbunden sind, dadurch gekennzeichnet, daß die Kontaktflächen der Verbindungsstecker (14, 16; 28, 37) als Flächenstecker ausgebildet sind.

2. Wellenkupplung nach Anspruch 1, dadurch gekennzeichnet, daß die Kontakfläche der Verbindungsstecker (15, 16) eben ausgebildet ist und in den Stromschienen (5, 6, 7, 8) schlitzartige Aussparungen für ihre Aufnahme vorgesehen sind.

3. Wellenkupplung nach Anspruch 1, dadurch gekennzeichnet, daß die Kontaktfläche der Verbindungsstecker (28, 37) gebogen ausgebildet ist und in den Stromschienen (5, 6, 7, 8) bogenförmig verlaufende schlitzartige Aussparungen für ihre Aufnahme vorgesehen sind.

4. Wellenkupplung nach Anspruch 1, dadurch gekennzeichnet, daß die Kontaktfläche der Verbindungsstecker (28, 37) kreisringförmig ausgebildet ist.

5. Wellenkupplung nach Anspruch 4 mit konzentrisch zueinander angeordneten Stromschienen, dadurch gekennzeichnet, daß in den konzentrisch zueinander angeordneten Stromschienen ringförmige Schlitze (27) oder ringförmige Ansätze zur Aufnahme der ringförmigen Flächenstecker (28, 37) vorgesehen sind.

645/79

6. Wellenkupplung nach Anspruch 4 mit halbrunden Stromschienen, dadurch gekennzeichnet, daß Anschlußstücke (21, 22) vorgesehen sind zur Überleitung der beiden halbrunden Stromschienen in zwei zueinander konzentrische Stromleiter (24, 26), die in ihren Stirnflächen ringförmige Schlitze oder ringförmige Ansätze zur Aufnahme der ringförmigen Flächenstecker besitzen.

7. Wellenkupplung nach Anspruch 6, dadurch gekennzeichnet, daß die Dicke der Flächenstecker in ihrem zwischen den beiden Stromschienen bzw. Anschlußstücken liegenden Teil (40) größer ist als der Stecker selbst.

8. Wellenkupplung nach einem oder mehreren der Ansprüche 1 bis 4, dadurch gekennzeichnet, daß die Flächenstecker an den Kontaktstellen mit Kontaktlamellen (17) versehen sind.

Figur 1

Figur 2

Fig. 3

Fig. 4

**Fig. 5**

**Fig.6**

**Fig. 7**

**Fig.8**

## EUROPÄISCHER RECHERCHENBERICHT

**Europäisches Patentamt**

Nummer der Anmeldung
EP 80 20 0859

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | <u>DE - A - 2 652 553</u> (VITSCHENKO)<br><br>* Figur 1; Seite 7, Zeile 26 bis Seite 8, Zeile 25 *<br><br>-- | 1 |
| DA | <u>DE - A - 1 807 438</u> (GENERAL ELECTRIC)<br><br>* Figuren 1-6; Seite 3, Zeile 21 bis Seite 6, Zeile 6 *<br><br>-- | 1,3,4, 6 |
| | <u>DE - A - 2 647 009</u> (AROSCHIDSE)<br><br>* Figuren 1,2; Seite 8, Zeile 20 bis Seite 9, Zeile 17 *<br><br>-- | 1,2 |
| | <u>GB - A - 907 022</u> (PARSSONS & CO)<br><br>* Figur 1; Seite 2, Zeilen 83-93 *<br><br>-- | 1 |
| A | <u>DE - A - 2 157 929</u> (BROWN BOVERI)<br><br>* Figur 1; Seite 5, Zeilen 9-31 *<br><br>-- | 1 |
| | <u>DE - B - 1 269 236</u> (SIEMENS)<br><br>* Figur 1; Spalte 3, Zeilen 26-55 *<br><br>-- | 1,3,4 |
| A | <u>DE - A - 2 332 700</u> (KRAFTWERK UNION)<br><br>* Figur 2; Seite 6, Zeilen 1-7 *<br><br>----- | 1 |

**KLASSIFIKATION DER ANMELDUNG (Int Cl ³)**

H 02 K 19/38
F 16 D 1/02

**RECHERCHIERTE SACHGEBIETE (Int. Cl.³)**

F 16 D 1/02
      1/04
H 01 R 39/00
H 02 K 13/00
      19/38

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 04-03-1981 | WAERN |

EPA form 1503.1  06.78